# EUROPEAN PATENT APPLICATION

(11) **EP 1 772 750 A1**
(43) Date of publication of application: **11.04.2007**
(21) Application number: 06020287.6
(22) Date of filing: 27.09.2006
(51) Int. Cl.: G01S 17/93, G01S 17/10

(54) **Distance measuring device**

(30) Priority: 04.10.2005 JP 2005291044
(71) Applicant: OMRON CORPORATION, Kyoto-shi, Kyoto 600-8530 (JP)
(72) Inventor: Miyazaki, Hidenori, c/o Omron Corporation, Shiokoji-dori Shimogyo-ku Kyoto-shi (JP); Fujioka, Ryoji, c/o Omron Corporation, Shiokoji-dori Shimogyo-ku Kyoto-shi (JP)
(74) Representative: Kilian, Helmut

(57) **Abstract**

A distance measuring device measures relative positional relationship with a target object based on time difference between time when detecting waves are projected and time when reflected waves from said target object are received. A plurality of wave projecting and receiving units are arranged in a selected scanning direction. Each of these units has a wave projecting device for projecting detecting waves to a detection area and a wave receiving device for receiving reflected waves of the detecting waves reflected by an object in the detection area. A mechanism is provided for scanning a target area in the selected scanning direction with the detecting waves from these wave projecting and receiving units. Distance to the object is obtained based on timing for receiving the reflected waves.

## Description

### Background of the Invention

This invention relates to a distance measuring device which can be used in a vehicle-mounted radar device and in particular to a multi-beam distance measuring device using a plurality of detecting waves.

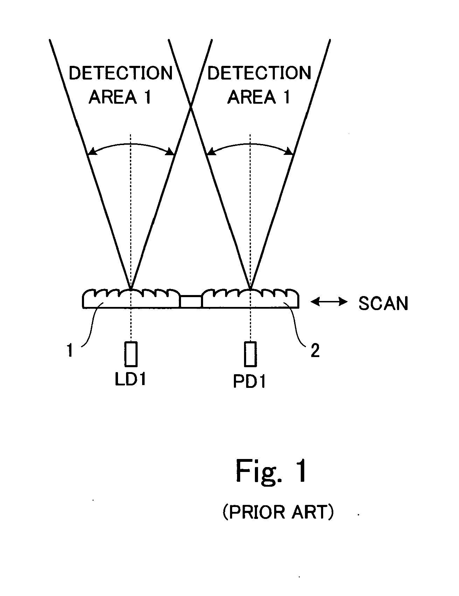

Prior art distance measuring devices are adapted to scan a desired target area by using a single light source and moving a light projecting-receiving lens in a scanning manner in the left-right direction. Fig. 1 shows schematically the light projecting-receiving part of such a prior art distance measuring device, using a laser diode LD1 as the light source at the focal point of a light projecting lens 1. The projected beam serving as the detecting wave in this example is a vertically elongated fan-shaped beam. A light receiving lens 2 is provided at the side of the light projecting lens 1, being formed integrally therewith, and a light receiving sensor PD1 is disposed at the focal point of this light receiving lens 2. As the integrally formed light projecting and receiving lenses 1 and 2 are moved in the left-right direction, the light projecting and receiving beams are similarly moved in the left-right direction.

In the above, if the angle subtended by the desired detection area is Y, the focal distance of the light projecting lens 1 is f, and the light source LD1 is at the focal point of the light projecting lens 1, the distance L to be moved by the light projecting lens 1 is given by L = 2f tan(Y/2). Since the light projecting and receiving lenses 1 and 2 move in synchronism with each other, the light receiving sensor PD 1 can receive the reflected light from the direction in which the beam is projected through the light projecting lens 1.

With the structure as shown in Fig. 1, if it is desired to increase the detection area, the distance of motion by the projecting lens 1 must be increased but if the distance of motion by the projecting lens 1 is increased, there arises the problem that the load on the actuator for driving the lens also increases. There also arises the additional problem that the full width half maximum (FWHM) of the beam profile near the end points becomes large compared to that at the center part.

If it is attempted to reduce the load on the actuator by reducing the distance of motion by the lens while maintaining the size of the detection area to be the same, however, it becomes necessary to reduce the focal length of the lens. This means that the size of the lens becomes small and this further means that the S/N ratio of the light receiving sensor becomes lower.

In order to increase the accuracy, on the other hand, it is necessary to reduce the period for updating the data obtained by the light receiving sensor, but if it is attempted to reduce this period by increasing the speed of motion of the lens (or its scanning speed), this affects the load on the actuator adversely. If the updating period of data is to be reduced by a factor of 3, for example, the scanning speed of the lens must be made three times faster.

The problem described above is encountered similarly by millimeter wave-type radar devices as long as the scanning is carried out by mechanical means.

Japanese Patent Publication Tokkai 9-76817 disclosed an optical system of an optical radar device using multiple beams. Japanese Patent Publication Tokkai 5-273340 disclosed the technology of combining a plurality of projectors and a single reflector to vary the beam shape according to the speed of the vehicle, as well as the technology of changing the detection area by switching the projectors. Japanese Patent Publication Tokkai 5-203738 disclosed a structure for forming multiple beams and providing an area where these beams overlap.

Since all of these inventions make use of a single light projecting device and a single light receiving device, however, the load on the actuator for driving the lens increases if it is attempted to broaden the detection area or to increase the scanning speed of the beam in order to improve the accuracy, and the problems of heat generation, mechanical wear and lowered reliability become inevitable.

### Summary of the Invention

It is therefore an object of this invention to provide a distance measuring device capable of broadening the detection area without increasing the load on the actuator by providing a plurality of light projecting-receiving devices.

Another object of this invention is to provide a distance measuring device capable of improving the accuracy of detection without increasing the speed of the scan.

In view of the above, the present invention relates to a distance measuring device for measuring relative positional relationship with a target object based on time difference between time when detecting waves are projected and time when reflected waves from the target object are received, characterized as comprising a plurality of wave projecting and receiving units arranged in a selected scanning direction such as the horizontal direction or the vertical direction, each of the units having a wave projecting device for projecting detecting waves to a detection area and a wave receiving device for receiving reflected waves of the detecting waves reflected by an object in the detection area, a mechanism for scanning a target area in the aforementioned selected scanning direction with the detecting waves from the plurality of wave projecting and receiving units, and means for obtaining distance to the object based on the timing of receiving the reflected waves.

With a distance measuring device thus structured, the scanning may be carried out only in the horizontal direction or sequentially in the horizontal and vertical directions. In either case, a two-dimensional area is scanned by the scanning mechanism. Thus, if the scanning is only in the horizontal direction, the beam of the detecting waves will have a vertically elongated sectional shape.

It is to be noted that each of the plurality of wave projecting and receiving units includes a pair of devices which are a wave projecting device and a wave receiving device. In other words, the reflected waves of the detecting waves from the wave projecting device of a first unit are adapted to be received by the wave receiving device of the first unit, and the reflected waves of the detecting waves from the wave projecting device of a second unit are adapted to be received by the wave receiving device of the second unit. Since the wave projecting and receiving devices of different units are distributed along the scanning direction, the different units may be arranged such that the detection areas of different units are at different positions, the detection areas of all of these wave projecting and receiving units together forming the target area of the distance measuring device as a whole. Thus, the distance of scanning by the scanning mechanism need not be made large in order to enlarge the target area.

It is further to be noted that although the distance measuring device of this invention comprises a plurality of wave projecting and receiving units and a plurality of wave projecting devices and wave receiving devices, their numbers need not necessarily be the same. The number of wave receiving devices may be smaller than that of wave projecting devices. In other words, a single wave receiving device may be adapted to receive detecting waves from a plurality of wave projecting devices.

According to a preferred embodiment of the invention, the detection areas of different ones of these wave projecting and receiving units are not necessarily separated from each other. Instead, those of two of the wave projecting and receiving units may overlap with each other. With the units thus structured, the overlapped detection areas can be measured more than once with one scanning of detecting waves and reflected waves. Thus, the frequency of updating data can be increased without increasing the speed of scanning and hence the accuracy of measurement can be improved.

According to another preferred embodiment of the invention, the timing of projecting the detecting waves from different ones of these wave projecting and receiving units may be varied. According to still another preferred embodiment of the invention, different ones of the wave projecting and receiving units project the detecting waves with different wavelengths, and the wave receiving device of each of these wave projecting and receiving units comprises a filter for passing waves with the same wavelength as the wavelength of the detecting waves projected from the corresponding wave projecting device. With such a structure, it is more easily prevent interference between the detecting areas covered by different wave projecting and receiving units, and more particularly between mutually adjacent detection areas.

### Brief Description of the Drawings

Fig. 1 shows schematically the light projecting-receiving part of a prior art distance measuring device.
Fig. 2 is a schematic structural diagram of a distance measuring device embodying this invention.
Fig. 3 is a structural diagram of its light projecting part.
Fig. 4 is a structural diagram of its light receiving part.
Fig. 5 is a structural diagram of another light receiving part.
Fig. 6 is a timing diagram for driving the light projecting part.
Fig. 7 is a structural diagram of another light projecting part.
Fig. 8 is a structural diagram of still another light receiving part.
Fig. 9 is a timing diagram for driving the light projecting part of Fig. 7.
Fig. 10 is a structural diagram of the light projecting part of Fig. 3 when the center line is shifted in the scan direction.
Fig. 11 is a structural diagram of the light projecting part of Fig. 7 when the center line is shifted in the scan direction.
Fig. 12 is a structural diagram of still another light projecting part.
Fig. 13 is a structural diagram of still another light receiving part.
Fig. 14 is a graph of spectroscopic sensitivity characteristics of band pass filters.
Fig. 15 is a timing diagram for driving the light projecting part of Fig. 12.

### Detailed Description of the Invention

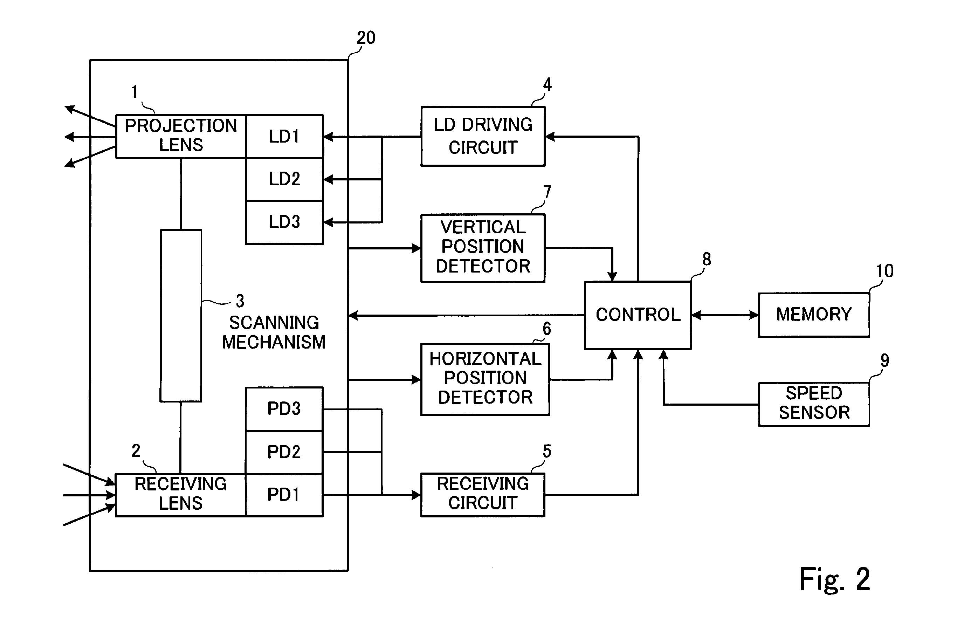

Fig. 2 is a schematic block diagram of a laser radar serving as a distance measuring device embodying this invention which may be mounted to a vehicle.

Numeral 20 indicates a scanner which comprises a light projecting lens 1, a light receiving lens 2, a scanning mechanism 3 for moving a projected beam (detecting waves) and a receiving beam (reflected waves) for scanning a target area by moving the light projecting and receiving lenses 1 and 2, laser diodes LD1, LD2 and LD3 serving as beam projecting means and photo diodes PD1, PD2 and PD3 serving as beam receiving means. The scanning mechanism 3, which is an actuator, is provided with a horizontally oriented plate spring, a vertically oriented plate spring, a horizontal driving coil and a vertical driving coil. A supporting member, which supports both the light projecting and receiving lenses 1 and 2 as a single body, is moved in the horizontal and vertical directions by causing specified currents to flow through these coils. The beams that are formed respectively by the light projecting and receiving lenses 1 and 2 are vertically elongated fan-shaped beams and they are used moved for scanning.

The laser diodes LD1, LD2 and LD3 are disposed behind the light projecting lens 1 in a horizontal scanning direction. Similarly, the photodiodes PD1, PD2 and PD3 are disposed behind the light receiving lens 2 in the horizontal scanning direction.

The laser diodes LD1, LD2 and LD3 are driven by means of a LD driving circuit 4, and the light receiving signals from the photodiodes PD1, PD2 and PD3 are received by a light receiving circuit 5. The horizontal and vertical positions of the scanning mechanism 3 are detected respectively by a horizontal position detector 6 and a vertical position detector 7. The LD driving circuit 4, the light receiving circuit 5, the horizontal position detector 6 and the vertical position detector 7 are connected to a control circuit 8.

A speed sensor 9 and a memory 10 are also connected to the control circuit 8. The control circuit 8 transmits driving control signals to the LD driving circuit 4, receives reflection signals of an object from the light receiving circuit 5 and obtains the current horizontal and vertical positions of the scanning mechanism 3 from the horizontal position detector 6 and the vertical position detector 7. The distance to and the position of an object in front such as a vehicle in a forward direction are measured from these received data, a speed signal (indicative of the speed of the own vehicle on which the device is mounted) is obtained from the speed sensor 9 and a control signal for controlling the distance between the vehicles (the own vehicle and the vehicle in front) is outputted to a vehicle control device (not shown). Thus, the control circuit 8 serves as means for obtaining the distance to a target object in the target area.

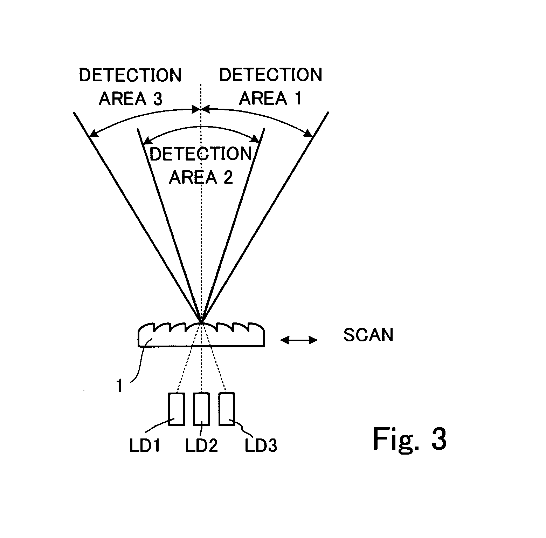

Fig. 3 shows the positional relationship between the laser diodes LD1, LD2 and LD3 and detection areas. As shown, the laser diodes LD1-LD3 are disposed at the focal position behind the light projecting lens 1 along a horizontal scan direction. The positions of the individual laser diodes LD1-LD3 are set such that the beams projected therefrom will respectively have detection areas indicated in Fig. 3 as Detection Areas 1-3. As the light projecting lens 1 is moved horizontally, the projecting beam from each of the laser diodes LD1-3 also moves in the left-right direction.

Fig. 3 also shows that the right-hand side of Detection Area 3 and the left-hand side of Detection Area 2 overlap and that the left-hand side of Detection Area 1 and the right-hand side of Detection Area 2 overlap. In other words, area portions near the scan center are overlapped. One of the merits of this structure is that the detection area can be made larger although the distance by which the light projecting lens 1 moves remains the same as with the prior art situation as shown in Fig. 1 because the whole detection area is served by three LDs. In other words, the distance to be moved by the light projecting lens 1 may be relatively small for obtaining a detection area of a size about the same as that shown in Fig. 1. Another merit is that twice as many data can be obtained by moving the light projecting lens 1 at the same speed as in the case of Fig. 1 because data obtainable by two scans can be obtained by one scan from an overlapped detection area. In other words, if the light projecting lens 1 is moved at the same scan speed as in the case of Fig. 1, relatively twice as many data can be obtained.

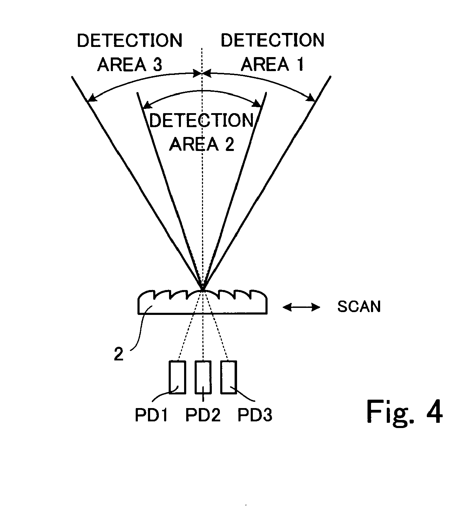

Fig. 4 shows the positional relationship between the photodiodes PD1, PD2 and PD3 and detection areas. As shown, the photodiodes PD1-PD3 are disposed at the focal position behind the light receiving lens 2 along a horizontal scan direction. The positions of the individual photodiodes PD1-PD3 are set such that the beams returned from detection areas indicated in Fig. 4 as Detection Areas 1-3 will be received respectively at these positions. As the light receiving lens 2 is moved horizontally, the received beam by each of the photodiodes PD1-PD3 also moves in the left-right direction.

Thus, with the light projecting part and the light receiving part formed as shown in Figs. 3 an 4, respectively, LD1 and PD1 form one pair, LD2 and PD2 form another pair, and LD3 and PD3 form still another pair such that the beam from LD1 projected to Detection Area 1 is received as reflected beam by PD1, the beam from LD2 projected to Detection Area 2 is received as reflected beam by PD2 and the beam from LD3 projected to Detection Area 3 is received as reflected beam by PD3. Since the entire detection area need not be covered by any one of the photodiodes PD1-PD3, the individual area of each photodiode may be made smaller and the S/N of each of the photodiodes PD1-PD3 can be relatively improved.

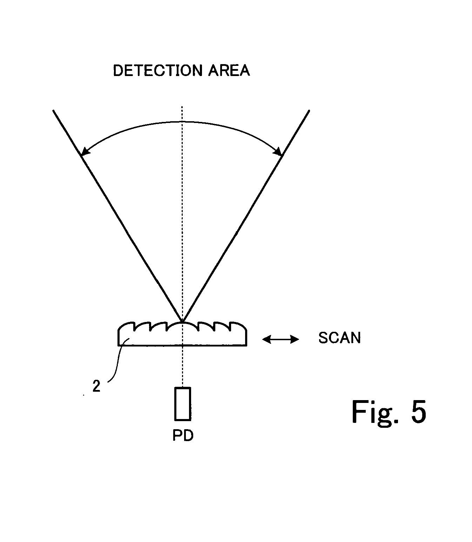

Fig. 5 shows another example of light receiving part characterized as using only one photodiode PD, with LD1 and PD forming one pair, LD2 and PD forming another pair and LD3 and PD forming a third pair. In other words, the single photodiode PD covers the entire detection area. This embodiment is inferior in terms of the S/N ratio but is superior from the point of view of the cost.

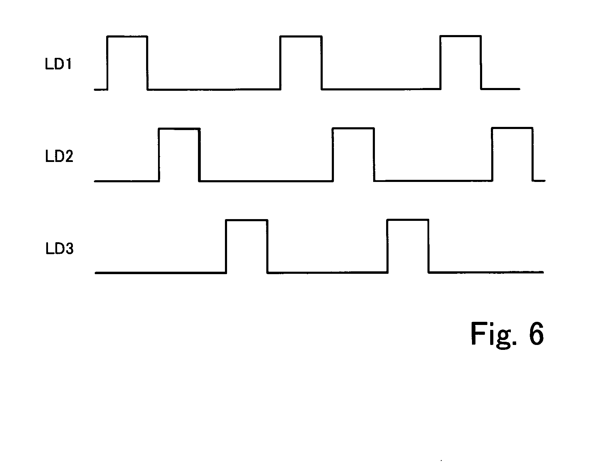

Fig. 6 is a timing diagram for driving the light projecting part characterized wherein the timing of driving the laser diodes LD1-LD3 is changed by the LD driving circuit 4. This serves to prevent interference in measurements among the pairs and hence the accuracy of measurements can be improved.

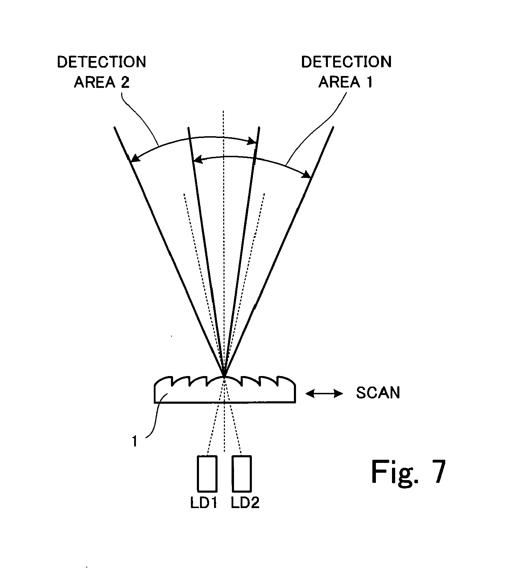

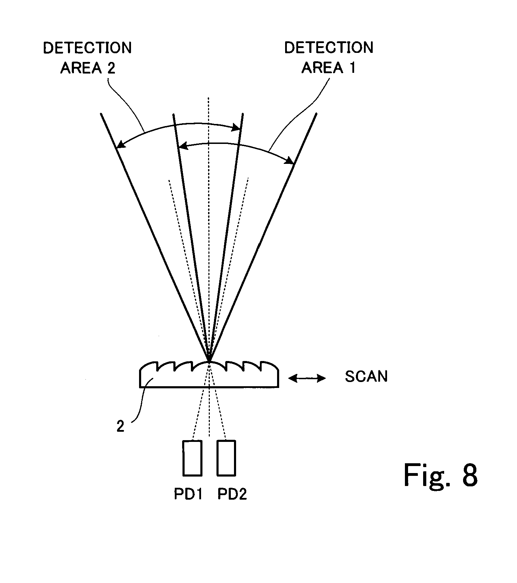

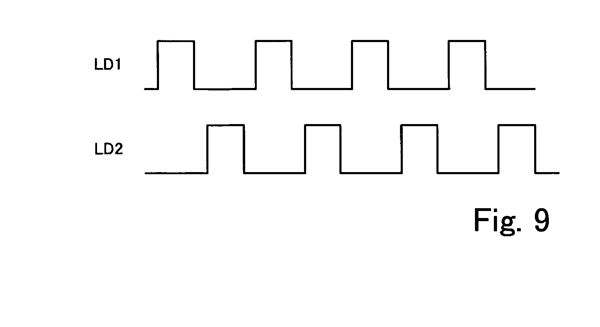

Fig. 7 is a structural diagram of another light projecting part characterized as using two laser diodes with their detection areas (Detection Areas 1 and 2) overlapped near the center. Fig. 8 shows the positions of corresponding photodiodes PD1 and PD2. Fig. 9 shows the timing of driving the laser diodes LD1 and LD2 shown in Fig. 7.

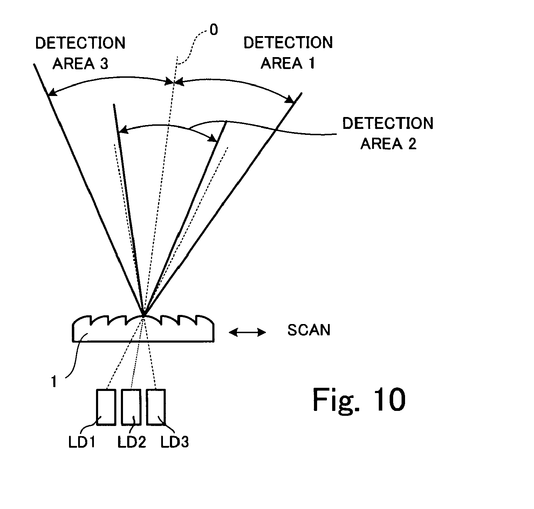

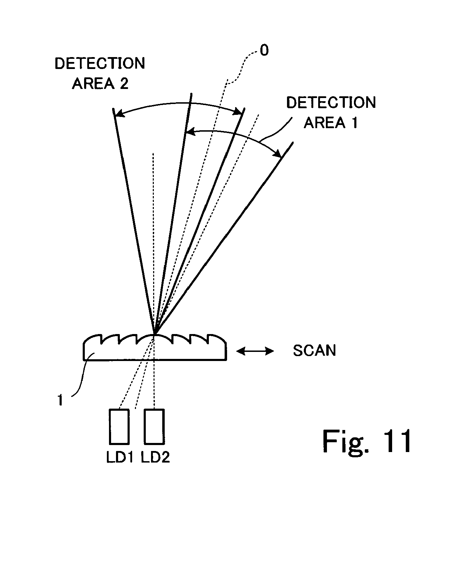

Figs. 10 and 11 respectively show the light projecting part of Figs. 3 and 7 when the center line O of the target area is shifted in the scan direction by controlling the scanning mechanism 3. As the vehicle begins to curve to right along the traffic lane, the center line O is shifted to the right. If the vehicle begins to curve to left, the center line O is shifted to left. Thus, the overlapped potion of the detection area is always in front of the vehicle and hence the front-going vehicle can be detected accurately and followed. In the above, examples of means for detecting the direction in which the own vehicle is curving include a steering wheel sensor, a gyroscope, a navigation system and a camera for monitoring the forward direction. Data on the road condition ahead can be obtained through such devices such that the center line O is caused to follow the traffic lane.

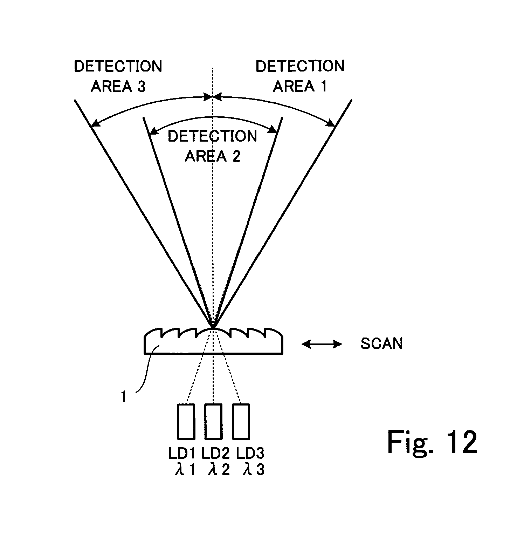

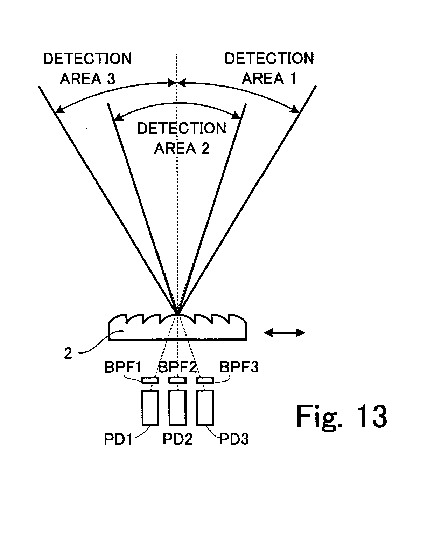

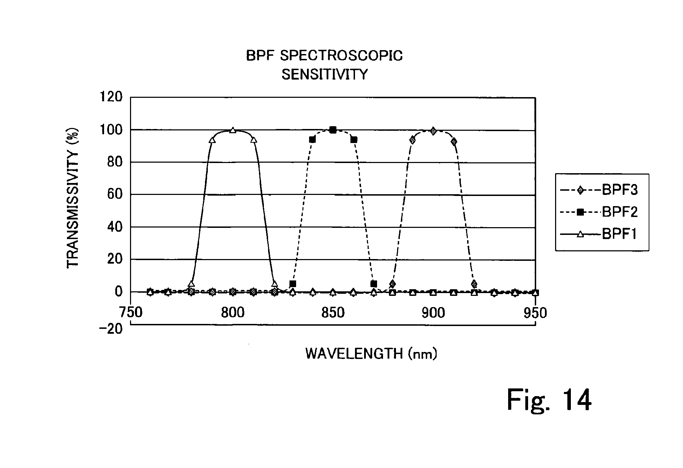

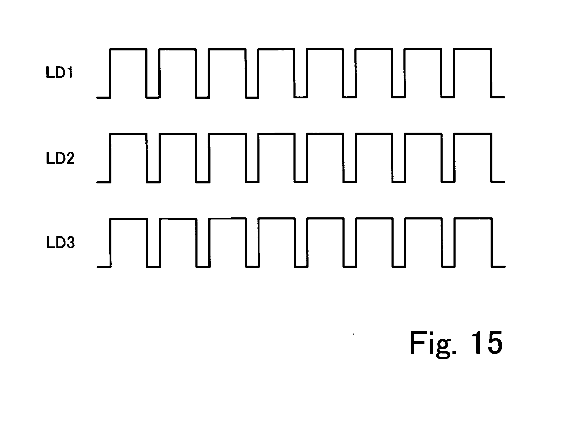

Figs. 12 and 13 show a light projecting device and a light receiving device according to still another embodiment which is similar to the embodiment described above with reference to Figs. 3 and 4 except the wavelengths λ1, λ2 and λ3 of the detection waves from the individual laser diodes LD1, LD2 and LD3 are different. Band pass filters BPF1, BPF2 and BPF3 are placed respectively in front of the photodiodes PD1, PD2 and PD3. Fig. 14 shows the spectroscopic sensitivity characteristics of these band pass filters BPF1, BPF2 and BPF3 when λ1=800nm, λ2=850nm and λ3=900nm such that each of the photodiodes PD1, PD2 and PD3 is adapted in this case to receive only the waves within wavelength range of the associated laser diode. Thus, there will be no interference even if the three laser diodes LD1, LD2 and LD3 are operated simultaneously. In summary, there is no problem of interference if the wavelength ranges of different pairs are set so as not to overlap, the timing of operating the laser diodes LD1, LD2 and LD3 may be as shown in Fig. 15. If the laser diodes LD1, LD2 and LD3 are thus operated simultaneously, the period for renewal of data can be shortened.

Although the invention was described above for situations where a plurality of laser diodes and photodiodes are arranged in a horizontal direction for a horizontal scan, this is not intended to limit the scope of the invention. Beams that are elongated in the horizontal direction may be employed with laser diodes and photodiodes arranged for a vertical scan.

## Claims

1. A distance measuring device for measuring relative positional relationship with a target object based on time difference between time when detecting waves are projected and time when reflected waves from said target object are received, said distance measuring device comprising:
a plurality of wave projecting and receiving units arranged in a selected scanning direction, each of said wave projecting and receiving units having a wave projecting device for projecting detecting waves to a detection area and a wave receiving device for receiving reflected waves of said detecting waves reflected by an object in said detection area;
a mechanism for scanning a target area in said selected scanning direction with the detecting waves from said plurality of wave projecting and receiving units; and
means for obtaining distance to said object based on timing for receiving said reflected waves.

2. The distance measuring device of claim 1 wherein the detection areas of two of said wave projecting and receiving units overlap with each other.

3. The distance measuring device of claim 1 wherein said mechanism varies the timing of projecting the detecting waves from different ones of said wave projecting and receiving units.

4. The distance measuring device of claim 1 wherein different ones of said wave projecting and receiving units project the detecting waves with different wavelengths; and
wherein the wave receiving device of each of said wave projecting and receiving units comprises a filter for passing waves with the same wavelength as the wavelength of the detecting waves projected from the corresponding wave projecting device.

5. The distance measuring device of claim 1 wherein said plurality of wave projecting and receiving units include the same number of wave projecting devices and wave receiving devices.

6. The distance measuring device of claim 1 wherein said mechanism includes means for moving light projecting and receiving lenses in said selected scanning direction for scanning said target area.

7. The distance measuring device of claim 2 wherein said mechanism includes means for moving light projecting and receiving lenses in said selected scanning direction for scanning said target area.

8. The distance measuring device of claim 3 wherein said mechanism includes means for moving light projecting and receiving lenses in said selected scanning direction for scanning said target area.

9. The distance measuring device of claim 4 wherein said mechanism includes means for moving light projecting and receiving lenses in said selected scanning direction for scanning said target area.

10. The distance measuring device of claim 5 wherein said mechanism includes means for moving light projecting and receiving lenses in said selected scanning direction for scanning said target area.

11. The distance measuring device of claim 1 wherein said mechanism is structured such that the center line of the detections areas of the wave projecting and receiving units is shiftable in said selected scanning direction.

12. The distance measuring device of claim 2 wherein said mechanism is structured such that the center line of the detections areas of the wave projecting and receiving units is shiftable in said selected scanning direction.

13. The distance measuring device of claim 3 wherein said mechanism is structured such that the center line of the detections areas of the wave projecting and receiving units is shiftable in said selected scanning direction.

14. The distance measuring device of claim 4 wherein said mechanism is structured such that the center line of the detections areas of the wave projecting and receiving units is shiftable in said selected scanning direction.

15. The distance measuring device of claim 5 wherein said mechanism is structured such that the center line of the detections areas of the wave projecting and receiving units is shiftable in said selected scanning direction.

16. The distance measuring device of claim 6 wherein said mechanism is structured such that the center line of the detections areas of the wave projecting and receiving units is shiftable in said selected scanning direction.

17. The distance measuring device of claim 7 wherein said mechanism is structured such that the center line of the detections areas of the wave projecting and receiving units is shiftable in said selected scanning direction.

18. The distance measuring device of claim 8 wherein said mechanism is structured such that the center line of the detections areas of the wave projecting and receiving units is shiftable in said selected scanning direction.

19. The distance measuring device of claim 9 wherein said mechanism is structured such that the center line of the detections areas of the wave projecting and receiving units is shiftable in said selected scanning direction.

20. The distance measuring device of claim 10 wherein said mechanism is structured such that the center line of the detections areas of the wave projecting and receiving units is shiftable in said selected scanning direction.
